(19) Europäisches Patentamt
European Patent Office
Office européen des brevets

(11) Publication number: 0 038 582
B1

(12) EUROPEAN PATENT SPECIFICATION

(45) Date of publication of patent specification: 28.08.85

(51) Int. Cl.$^4$: C 08 G 69/26, C 08 G 69/28

(21) Application number: 81200325.9

(22) Date of filing: 25.03.81

# (54) Production of polyamide-based objects.

(30) Priority: 26.03.80 NL 8001762

(43) Date of publication of application:
28.10.81 Bulletin 81/43

(45) Publication of the grant of the patent:
28.08.85 Bulletin 85/35

(84) Designated Contracting States:
BE CH DE FR GB IT LI NL SE

(56) References cited:
JP-B-74 017 036
US-A-2 130 948

Synthetic Fibre Developments in Germany, Part II, pp. 726, 730
JOURNAL OF POLYMER SCIENCE, Polymer Chemistry, Edition, vol. 15, no. 3, March 1977, R.J. GAYMANS et al. "Preparation and some properties of nylon 46" pages 537-545

The file contains technical information submitted after the application was filed and not included in this specification

(73) Proprietor: STAMICARBON B.V.
Postbus 10
NL-6160 MC Geleen (NL)

(72) Inventor: Gaymans, Reinoud Jaap
Verdilaan 3
NL-7522 KA Enschede (NL)
Inventor: Van Asperen, Pieter Jan
Boerhaavestraat 21
NL-6164 GP Geleen (NL)

(74) Representative: Hatzmann, Marinus Jan et al
OCTROOIBUREAU DSM P.O.Box 9
NL-6160 MA Geleen (NL)

EP 0 038 582 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process of producing objects, by injection moulding or extrusion of a melt of a polyamide. The production of objects starting from polyamides, such as polycaprolactam (nylon 6) or polyhexamethyleneadipamide (nylon 6,6) or polylaurolactam (nylon 12), is known. The maximum softening temperature under load (HDT value) of the objects thus obtained is relatively low, about 120°C max. This can be improved by the use of a mixture of polyamides with a reinforcing filler, such as glass fibre. Another disadvantage of nylon 6 and nylon 6,6 is their low notched impact resistance.

The object of the invention is to provide a process of producing polyamide-based objects that possess high notched impact resistance and a high HDT value.

According to the invention, use is made of a melt of a polyamide having a molecular chain of units of

$$[NH—(CH_2)_4—NH—CO—(CH_2)_4—CO]$$

optionally containing up to 20 wt-% related to the total of units derived from other polyamide forming compounds, which polyamide has a relative viscosity of at least 2.0 measured at 20°C, on a 1% by weight solution in 96% sulfuric acid, and which polyamide has been produced by preparing a prepolymer in the presence of an excess of 1,4 diaminobutane of 0.5—15 mole %, and after condensing the solid prepolymer in the presence of an atmosphere containing water vapour, for preparing objects by extrusion or injection moulding.

Polyamide consisting of

$$[NH—(CH_2)_4—NH—CO—(CH_2)_4—CO]$$

units has been described in Journal of Polymer Science, Polymer Chemistry Edition, Vol. 15, No. 3, March 1977, pages 537—545.

A polyamide substantially consisting of

$$[NH(CH_2)_4—NH—CO(CH_2)_4—CO]$$

units, hereinafter to be referred to as nylon 4,6, is readily processed from the melt. The HDT of objects made of nylon 4,6 is about 170°C or higher, whereas objects of nylon 6,6 have a HDT value of about 110°C. The notched impact resistance of objects made of nylon 4,6 is, surprisingly, considerably higher than that of objects made of nylon 6 or nylon 6,6, at comparable relative viscosity. Nylon 4,6 can be processed on the usual injection moulding and extrusion machines. The flow characteristics of the polyamide and the appearance of objects made of it are comparable to those of polyamide 6 or 6,6.

Nylon 4,6 is prepared from adipic acid and 1,4-butanediamine. Adipic acid is a product commercially obtainable on a large scale. Butanediamine is also commercially obtainable and can be prepared from hydrocyanic acid an acrylonitrile, with hydrogenation of the succinonitrile formed. The polymerization of butanediamine with adipic acid can be effected in the way known from the preparation of nylon 6,6. First the salt of the diamine with the dicarboxylic acid is formed, after which this is converted by condensation into a polymer. The molecular weight of the polymer can be raised by after-condensation of the solid phase or the melt. Objects are made from a nylon 4,6 having a relative viscosity (ηrel.) of 2.0 or higher. Preferably a polymer having a relative viscosity of 2.5 or higher is used. For making objects that have to satisfy high requirements, preference is given to the use of a nylon 4,6 with a relative viscosity of 5 or more. A polymer with a very high relative viscosity, e.g. 10 or more, is difficult to process and its application is therefore not preferred. Nylon 4,6 has a melting point of between 275 and 300°C depending on the pretreatment. The polymer is readily processed at temperatures of between 290 and 330°C without appreciable degradation, provided water and oxygen are excluded. An advantage in comparison with nylon 6 is that the polymer does not require extraction for removal of monomer and/or oligomers after the polymerization. Processing may be done by means of the machines known and suitable for injection moulding and extrusion. In the process according to the invention use is preferably made of a polyamide consisting wholly of

$$[NH—(CH_2)_4—NH—CO—(CH_2)_4—CO]$$

units. Optionally the polyamide to be processed may contain up to 20 % wt.—related to the total—of units derived from other compounds forming polyamides. Examples of such compounds are aminocarboxylic acids and lactams such as caprolactam, undecalactam and laurolactam, aliphatic, cycloaliphatic or aromatic dicarboxylic acids such as succinic acid, sebacic acid, isophthalic acid and terephthalic acid, aliphatic, cycloaliphatic and aromatic diamines such as hexamethylenediamine, 1,4-diaminomethylcyclohexane, and p-phenylenediamine. By preference not more than 10 moles % of the diaminobutane or the adipic acid is replaced by other diamines or dicarboxylic acids. The polyamide may receive an addition of the usual fillers, such as carbon black, chalk, talc, alumina and silica, reinforcing fillers such as glass fibres, antioxidants, antistatic agents, and pigments. The polyamide may also be mixed with an elastomer or a thermoplastic other polymer. In particular, the use may be considered of amounts of between 5 and 25 % by weight, related to the polyamide, of a rubbery or non-rubbery polymer containing carboxyl groups. The polyamide can be processed to intermediate products, such as profiles. It can also be processed to such objects as cases for electric appliances, tubes, hoses, components for electrical and mechanical equipment. Nylon 4,6 is readily worked by mechanical means.

The invention will be elucidated by means of the following example.

Example

Nylon 4,6 powder, prepared by the process according to the simultaneously filed EP 81200326.7 and EP 81200327.5 (Dutch patent applications 8001763 and 8001764) and was dried in vacuo over $P_2O_5$ at 50°C. The powder was injection moulded to form test bars on a Teknika Type SR 22 injection-moulding machine, at a temperature of the material of about 310°C and a mould temperature of 80°C. The relative viscosity of the injection-moulded material was 2.85.

The Izod notched impact resistance of both dry and conditioned (23°C, 50 % rel.hum.) test bars was determined in accordance with ISO R 180, with a curvature radius of the notch amounting to 0.025 cm (0.01 inch), at 23°C and −20°C. The results are shown in the table.

For comparison, test bars were made in the same way of nylon 6 (commercial product Akulon M 2) by injection moulding at a temperature of the material of 240°C, and of nylon 6,6 (commercial product Akulon R 600) at 270°C. The Izod notched impact resistance of these specimens was determined too. These data are also shown in the table, for comparison.

TABLE

| | | Izod value at 23°C, kJ/m² | Izod value at −20°C, kJ/m² |
|---|---|---|---|
| nylon 4,6 | dry | 10.0 | — |
| | conditioned | 51.4 | 10.6 |
| nylon 6 | dry | 5.3 | — |
| | conditioned | 21.0 | 3.5 |
| nylon 6,6 | dry | 4.7 | — |
| | conditioned | 19.2 | 3.2 |

**Claims**

1. Use of a melt of a polyamide having a molecular chain of units of

$$[NH—(CH_2)_4—NH—CO—(CH_2)_4—CO]$$

optionally containing up to 20 wt-% related to the total of units derived from other polyamide forming compounds, which polyamide has a relative viscosity of at least 2.0 measured at 20°C, on a 1 % by weight solution in 96 % sulfuric acid and which polyamide has been produced by preparing a prepolymer in the presence of an excess of 1,4 diaminobutane of 0.5—15 mole %, and after condensing the solid prepolymer in the presence of an atmosphere containing water vapour, for preparing objects by extrusion or injection moulding.

2. Use of a melt of a polyamide according to claim 1, characterized in that the polyamide has a relative viscosity of 2.5 or more.

3. Use of a melt of a polyamide according to anyone of the claims 1—2, characterized in that the polyamide has a relative viscosity of 5 or more.

4. Use of a melt of a polyamide according to anyone of the claims 1—3, characterized in that the polyamide is a homopolyamide of 1.4-butanediamine and adipic acid.

5. Process for producing an object by extrusion or injection moulding a melt of a polyamide with exclusion of oxygen and moisture, at a temperature of between 290 and 330°C, said polyamide consisting substantially of a molecular chain of units of

$$[NH—(CH_2)_4—NH—CO—(CH_2)_4—CO]$$

optionally containing up to 20 wt-% related to the total of units derived from other polyamide forming compounds, which polyamide has a relative viscosity of at least 2.0 measured at 20°C, on a 1 % by weight solution in 96 % sulfuric acid and which polyamide has been produced by preparing a prepolymer in the presence of an excess of 1,4 diaminobutane of 0.5—15 mole %, and after condensing the solid prepolymer in the presence of an atmosphere containing water vapour.

6. Injection moulded or extruded object prepared from a melt of a polyamide consisting of a molecular chain of units of

$$[NH—(CH_2)_4—NH—CO—(CH_2)_4—CO]$$

optionally containing up to 20 wt-% related to the total of units derived from other polyamide forming compounds, which polyamide has a relative viscosity of at least 2.0 measured at 20°C, on a 1 % by weight solution in 96 % sulfuric acid and which polyamide has been produced by preparing a prepolymer in the presence of an excess of 1,4 diaminobutane of 0.5—15 mole %, after condensing the solid prepolymer in the presence of an atmosphere containing water vapour.

**Patentansprüche**

1. Verwendung einer Schmelze einer molekularen Kette von Einheiten von

$$[NH—(CH_2)_4—NH—CO—(CH_2)_4—CO],$$

enthaltend gegebenenfalls bis zu 20 Gew.-%, bezogen auf die Gesamtmenge, an Einheiten abgeleitet von anderen olyamidbildenden Verbindungen, welches Polyamid eine relative Viskosität, gemessen bei 20°C an einer 1 gew.-%igen Lösung in 96 %iger Schwefelsäure, von 2,0 hat und durch Bildung eines Vorpolymers in Gegenwart eines Überschusses von 1,4 Diaminobutan von 0,5—15 Mol-% und Nachkondensation des Vorpolymers in Gegenwart einer Wasserdampf enthaltenden Atmosphäre hergestellt wurde, zur

Herstellung von Gegenständen durch Strangpressen und Spritzguß.

2. Verwendung einer Schmelze eines Polyamids nach Anspruch 1, dadurch gekennzeichnet, daß das Polyamid eine relative Viskosität von 2,5 oder mehr besitzt.

3. Verwendung einer Schmelze eines Polyamids nach den Ansprüchen 1—2, dadurch gekennzeichnet, daß das Polyamid eine relative Viskosität von 5 oder mehr besitzt.

4. Verwendung einer Schmelze eines Polyamids nach den Ansprüchen 1—3, dadurch gekennzeichnet, daß das Polyamid ein Homopolyamid von 1,4-Butandiamin und Adipinsäure ist.

5. Verfahren zur Herstellung eines Gegenstandes durch Strangpressen oder Spritzgießen einer Schmelze eines Polyamids unter Ausschluß von Sauerstoff und Feuchtigkeit bei einer Temperatur zwischen 290 und 330°C wobei die Schmelze im wesentlichen aus einer molekularen Kette von Einheiten von

$$[NH—(CH_2)_4—NH—CO—(CH_2)_4—CO]$$

enthaltend gegebenenfalls bis zu 20 Gew.-%, bezogen auf die Gesamtmenge, an Einheiten abgeleitet von anderen Polyamidbildenden Verbindungen, welches Polyamid eine relative Viskosität, gemessen bei 20°C an einer 1 gew.-%igen Lösung in 96 %iger Schewefelsäure, von 2,0 hat und durch Bildung eines Vorpolymers in Gegenwart eines Überschusses von 1,4 Diaminobutan von 0,5—15 Mol-% und Nachkondensation des Vorpolymers in Gegenwart einer Wasserdampf enthaltenden Atmosphäre hergestellt wurde, besteht.

6. Im Spritzguß- oder Strangpreßverfahren hergestellter Gegenstand aus einer Schmelze eines Polyamids, das aus einer molekularen Kette von Einheiten von

$$[NH—(CH_2)_4—NH—CO—(CH_2)_4—CO],$$

gegebenenfalls enthaltend bis zu 20 Gew.-%, bezogen auf dei Gesamtmenge, an Einheiten abgeleitet von anderen Polyamid- bildenden Verbindungen, besteht und eine relative Viskosität, gemessen bei 20°C an einer 1 gew.-%igen Lösung in 96%iger Schwefelsäure, von zumindest 2,0 hat und das durch Bildung eines Vorpolymers in Gegenwart eines Überschusses von 1,4 Diaminobutan von 0,5—15 Mol-% und Nachkondensation des festen Vorpolymers in Gegenwart einer Wasserdampf enthaltenden Atmosphäre hergestellt worden ist.

**Revendications**

1. Utilisation d'une masse fondue d'une polyamide à chaîne moléculaire de motifs de

$$[NH—(CH_2)_4—NH—CO—(CH_2)_4—CO]$$

contenant facultivement jusqu'à 20 % en poids, par rapport au total, de motifs dérivés d'autres composés formant des polyamides, ledit polyamide ayant une viscosité relative d'au moins 2,0 mesurée à 20°C sur une solution à 1 % en poids dans l'acide sulfurique à 96 %, ledit polyamide ayant été produit par préparation d'une prépolymère en présence d'un excès de 1,4-diaminobutane de 0,5—15 moles % et post-condensation du prépolymère solide en présence d'une atmosphère contenant de la vapeur d'eau, pour préparer des objets par extrusion ou moulage par injection.

2. Utilisation d'une masse fondue d'un polyamide selon la revendication 1, caractérisée en ce que le polyamide a une viscosité relative de 2,5 ou plus.

3. Utilisation d'une masse fondue d'un polyamide selon les revendications 1 et 2, caractérisée en ce que le polyamide a une viscosité relative de 5 ou plus.

4. Utilisation d'une masse fondue d'un polyamide selon les revendications 1 à 3, caractérisée en ce que le polyamide est une homopolyamide de 1,4-butanediamine et d'acide adipique.

5. Procédé de production d'un objet par extrusion ou par moulage par injection d'une masse fondue d'un polyamide en l'absence d'oxygène et d'humidité à une température entre 290 et 330°C, ladite masse fondue consistant essentiellement en une chaîne moléculaire de motifs de

$$[NH—(CH_2)_4—NH—CO—(CH_2)_4—CO]$$

contenant facultativement jusqu'à 20 % en poids, par rapport au total, de motifs d'autres composés formant des polyamides, ce polyamide ayant une viscosité relative d'au moins 2,0 mesurée à 20°C dans une solution à 1 % en poids dans l'acide sulfurique à 96 %, ce polyamide ayant été produit en préparant un prépolymère en présence d'un excès de 1,4-diaminobutane de 0,5 à 15 moles % et en post-condensant le prépolymère solide en présence d'une atmosphère contenant de la vapeur d'eau.

6. Objet moulé par injection ou extrudé qui a été préparé à partir d'une masse fondue d'un polyamide consistant en une chaîne moléculaire de motifs de

$$[NH—(CH_2)_4—NH—CO—(CH_2)_4—CO]$$

contenant facultativement jusqu'à 20 % en poids, par rapport au total, de motifs dérivés d'autres composés formant des polyamides, ledit polyamide ayant une viscosité relative d'au moins 2,0 mesurée à 20°C sur une solution à 1 % en poids dans l'acide sulfurique à 96 %, ledit polyamide ayant été produit par préparation d'un prépolymère en présence d'un excès de 1,4-diaminobutane de 0,5—15 moles % et post-condensation du prépolymère solide en présence d'une atmosphère contenant de la vapeur d'eau.